# EUROPÄISCHE PATENTANMELDUNG

(11) **EP 4 718 682 A1**
(43) Veröffentlichungstag der Anmeldung: **01.04.2026**
(21) Anmeldenummer: 25201897.3
(22) Anmeldetag: 12.09.2025
(51) Int. Cl.: H02J 7/70, H01M 10/42, H01M 50/247

(54) **AKKUMULATOR SOWIE VERFAHREN ZUM BETREIBEN EINES AKKUMULATORS**

(30) Priorität: 27.09.2024 DE 102024128097
(71) Anmelder: Einhell Germany AG, 94405 Landau / Isar (DE)
(72) Erfinder: Szekacs, Endre, 94363 Oberschneiding (DE); Fech, Daniel, 86647 Buttenwiesen (DE)
(74) Vertreter: Canzler & Bergmeier Patentanwälte Partnerschaft mbB

(57) **Zusammenfassung**

Die vorliegende Erfindung betrifft einen Akkumulator (1), insbesondere IoT-Akkumulator, mit wenigstens einer Akkumulatorzelle (2) zur Aufnahme, Speicherung und Abgabe von Energie, einer Energieschnittstelle (3) zur Verbindung des Akkumulators (1) mit einem Endgerät und/oder einer externen Energiequelle, und einer ersten Steuereinheit (4) zum Steuern der wenigstens einen Akkumulatorzelle (2) und/oder der Energieschnittstelle (3). Außerdem betrifft die Erfindung ein Verfahren zum Betreiben eines Akkumulators (1). Erfindungsgemäß zeichnet sich der Akkumulator (1) dadurch aus, dass die erste Steuereinheit (4) einen ersten Steuerkern (5) und einen zweiten Steuerkern (6) umfasst oder dass der Akkumulator (1) zusätzlich zur ersten Steuereinheit (4) eine zweite Steuereinheit (7) umfasst.

## Beschreibung

Die vorliegende Erfindung betrifft einen Akkumulator, insbesondere IoT-Ackumulator, mit wenigstens einer Akkumulatorzelle zur Aufnahme, Speicherung und Abgabe von Energie, einer Energieschnittstelle zur Verbindung des Akkumulators mit einem Endgerät und/oder einer externen Energiequelle, und einer ersten Steuereinheit zum Steuern der wenigstens einen Akkumulatorzelle und/oder der Energieschnittstelle. Außerdem betrifft die Erfindung ein Verfahren zum Betreiben eines Akkumulators.

Gattungsgemäße Akkumulatoren sind seit langem bekannt. Sie dienen beispielsweise der Energieversorgung von Elektrowerkzeugen. Dabei werden meist mehrere Akkumulatoren im Wechsel verwendet, um Unterbrechungen der Arbeit mit dem Elektrowerkzeug zu vermeiden. Die in den letzten Jahrzehnten gestiegenen Kapazitäten erlauben es, auch größere Elektrogeräte, wie beispielsweise Rasenmäher, mit Akkumulatoren zu betreiben. Meist verwenden Hersteller von Elektrogeräten Akkumulatorsysteme mit entsprechenden Ladegeräten und Akkumulatoren, deren Energieschnittstelle auf bestimmte Weise ausgeführt ist, so dass Akkumulatoren eines Herstellers in der Regel nicht mit den Elektrogeräten eines anderen Herstellers kompatibel sind. Der Kauf eines Akkumulatorsystems trägt also stark zur Kundenbindung eines Elektrogeräteherstellers bei.

Es ist daher wünschenswert, Akkumulatoren mit zusätzlichen Funktionen als Kaufargument auszustatten, womit den Akkumulatoren selbst, aber eventuell auch den damit betriebenen Endgeräten ein Marktvorteil verliehen wird. Hierbei können den Akkumulatoren beispielsweise intelligente Funktionen, wie eine Programmierbarkeit durch einen Benutzer, hinzugefügt werden. Auch können den Akkumulatoren umfangreiche Kommunikationsfähigkeiten mit Nutzern und anderen Geräten verliehen werden. Die Akkumulatoren lassen sich auf diese Weise in das sich immer weiter entwickelnde sogenannte Internet der Dinge (engl. "Internet of Things, IoT") eingliedern. Ein intelligenter IoT-Akkumulator kann beispielsweise mit einem Benutzer über verschiedene Endgeräte kommunizieren. Eventuell können die Energieabgabe und -aufnahme, insbesondere die Höhe von Spannungen und Strömen, sowie Zeitpunkte und Zeitintervalle der Energieabgabe und -aufnahme individuell vom Nutzer eingestellt bzw. programmiert werden. Hierbei sollte aber sichergestellt sein, dass die Betriebssicherheit des Akkumulators nicht gefährdet ist.

Aufgabe der vorliegenden Erfindung ist es daher, einen sicheren Akkumulator und ein Verfahren vorzuschlagen, mit dem ein Akkumulator sicher betrieben werden kann.

Die Aufgabe wird gelöst durch einen Akkumulator und ein Verfahren zum Betreiben eines Akkumulators mit den Merkmalen der unabhängigen Patentansprüche.

Der erfindungsgemäße Akkumulator ist insbesondere als IoT-Akkumulator ausgebildet. Dies beinhaltet beispielsweise einige oder alle der oben bereits beschriebenen Funktionen. Der Akkumulator umfasst vorzugsweise wenigstens eine Akkumulatorzelle zur Aufnahme, Speicherung und Abgabe von Energie. Die Akkumulatorzelle stellt insbesondere die Grundfunktion des Ackumulators des Betreibens von angeschlossenen Endgeräten bereit. Der Ackumulator kann je nach Energiekapazität unterschiedlich viele Akkumulatorzellen aufweisen. Der Akkumulator umfasst beispielsweise wenigstens zwei Akkumulatorzellen. Die Akkumulatorzellen sind insbesondere durch ein an den Akkumulator angeschlossenes Ladegerät wiederaufladbar.

Darüber hinaus umfasst der Akkumulator vorzugsweise eine Energieschnittstelle zur Verbindung des Akkumulators mit einem Endgerät und/oder einer externen Energiequelle. Die Energieschnittstelle stellt insbesondere eine Verbindung zwischen der wenigstens einen Akkumulatorzelle und einem angeschlossenen Ladegerät oder einem angeschlossenen Endgerät bereit. Außerdem umfasst der Akkumulator eine erste Steuereinheit zur Steuerung der wenigstens einen Akkumulatorzelle und/oder der Energieschnittstelle. Die erste Steuereinheit verwaltet in bekannten Akkumulatoren beispielsweise die Lade- und Entladevorgänge und überwacht die Betriebsparameter des Akkumulators.

Erfindungsgemäß zeichnet sich der Akkumulator dadurch aus, dass die erste Steuereinheit einen ersten Steuerkern und einen zweiten Steuerkern umfasst oder dass der Akkumulator zusätzlich zur ersten Steuereinheit eine zweite Steuereinheit umfasst. Ziel dieser Ausführungen ist es, insbesondere die Sicherheitsfunktionen des Akkumulators von den erweiterten Funktionen zu trennen, so dass beispielsweise gewährleistet ist, dass die Sicherheitsfunktionen nicht von den erweiterten Funktionen beeinflusst werden und so vorzugsweise stets gewährleistet ist, dass der Akkumulator innerhalb vorgegebener Sicherheitsparameter betrieben wird. Die getrennte Steuerungsstruktur erschafft beispielsweise einen gesicherten Bereich, auf den ein Nutzer im Rahmen intelligenter Funktionen des Akkumulators keinen Zugriff erhält. Es wird stets sichergestellt, dass der Akkumulator seine Grundfunktionen in sicherer Weise erfüllen kann.

Der ungesicherte Bereich kann beispielsweise vom Nutzer oder durch Updates sehr frei eingestellt werden, ohne dass hierdurch befürchtet werden muss, dass die Betriebssicherheit des Akkumulators gefährdet wird.

Vorteilhaft ist es, wenn die erste Steuereinheit oder der erste Steuerkern der ersten Steuereinheit als Batteriemanagementsystem ausgebildet ist. Hierdurch übernimmt beispielsweise die erste Steuereinheit oder der erste Steuerkern die essenziellen Aufgaben zur Überwachung und Steuerung der Ackumulatorzellen. Dies umfasst beispielsweise die Kontrolle von Ladezustand, Spannung, Stromfluss und/oder Temperatur einzelner Akkumulatorzellen und/oder des ganzen Akkumulators. Durch diese Spezialisierung wird sichergestellt, dass die kritischen Sicherheits- und Leistungsfunktionen des Akkumulators von einem dedizierten System verwaltet werden. Die erste Steuereinheit oder der erste Steuerkern kann insbesondere mit Schutzfunktionen versehen sein, die den Akkumulator vor Überladung, Tiefentladung oder thermischer Überlastung bewahren.

Besonders vorteilhaft ist es, wenn die zweite Steuereinheit oder der zweite Steuerkern als IoT-Schnittstelle ausgebildet ist oder eine IoT-Schnittstelle umfasst. Hierdurch kann der Akkumulator an IoT-Netzwerke und -Dienste angebunden werden. Die IoT-Schnittstelle kann beispielsweise Daten über den Zustand und die Leistung des Akkumulators erfassen, verarbeiten und über standardisierte Kommunikationsprotokolle an externe Systeme übermitteln. Umgekehrt können auch Steuerbefehle oder Konfigurationsänderungen von außen empfangen und verarbeitet werden. Die IoT-Schnittstelle kann beispielsweise über eine Akkudatenschnittstelle insbesondere durch Mobilfunk, WLAN, Bluetooth, Zigbee und/oder "Long Range Wide Area Network" (LoRaWAN) flexibel vernetzt werden.

Über die IoT-Schnittstelle kann der Akkumulator insbesondere mit anderen Akkumulatoren, Ladegeräten, Endgeräten und/oder Unterhaltungselektronikgeräten in der Umgebung kommunizieren. Ein Akkumulator mit niedrigem Ladestand kann einen Benutzer hierdurch beispielsweise auf einen Akkumulator mit höherem Ladestand in der Nähe oder ein nahegelegenes Ladegerät aufmerksam machen. Es können ebenfalls Betriebsparameter, Updates und Daten über die Umgebung ausgetauscht werden. Beispielsweise kann ein Akkumulator, der hohen Temperaturen oder Feuchtigkeit ausgesetzt ist, einen Benutzer durch dessen Smartphone alarmieren.

Der Akkumulator kann sich ebenfalls beispielsweise mit einem Ortungsdienst, wie ihn insbesondere große Mobiltelefonhersteller betreiben, verbinden und so bei Verlust oder Diebstahl wiedergefunden werden.

Besondere Vorteile bringt es mit sich, wenn die zweite Steuereinheit oder der zweite Steuerkern eine Programmierschnittstelle umfasst. Hierdurch können insbesondere Benutzer den Akkumulator innerhalb seiner Sicherheitsparameter frei konfigurieren. Einerseits können beispielsweise intelligente Endgeräte durch die im Akkumulator hinterlegten Programme gesteuert werden. Andererseits können auch Endgeräte ohne intelligente Funktionen individuell durch im Akkumulator hinterlegte Programme gesteuert werden. Insbesondere können Zeiträume von Energieabgabe und -aufnahme sowie Spannung und Stromstärken festgelegt werden. Falls beispielsweise eine Beleuchtung mit dem Akkumulator betrieben wird, kann festgelegt werden, dass die Beleuchtung am Abend, durch Energieabgabe des Akkumulators aktiviert wird. Eine Helligkeit der Beleuchtung lässt sich eventuell durch die abgegebene Spannung und Stromstärke beeinflussen. Falls die Beleuchtung mit dem Ackumulator kommunizieren kann, lässt sich beispielsweise noch eine Farbe oder Farbmischung der Beleuchtung durch eine Programmierung des Akkumulators festlegen.

Benutzerdefinierte Betriebsprogrammdaten können beispielsweise von einer externen Bereitstellungseinheit bereitgestellt werden. Die Bereitstellungseinheit ist beispielsweise eine Cloud, ein Smartphone, ein PC und/oder ein Laptop, wobei die Bereitstellungseinheit insbesondere mit einer Akkudatenschnittstelle des Akkumulators verbunden ist. Die Bereitstellungseinheit kann eine, insbesondere grafische, Benutzeroberfläche und/oder eine, insbesondere grafische, Programmiersoftware umfassen.

Die Programmierschnittstelle kann insbesondere eine API (Application Programming Interface) bereitstellen, über die externe Anwendungen auf bestimmte Funktionen und Daten des Akkumulators zugreifen können. So kann ein Benutzer beispielsweise Funktionen des Akkumulators über eine Anwendung auf dem Smartphone steuern. Die Programmierschnittstelle kann vorzugsweise so gestaltet sein, dass sie nur auf den ungeschützten Bereich, also insbesondere die zweite Steuereinheit oder den zweiten Steuerkern, des Akkumulators Zugriff hat, um die Sicherheit der Kernfunktionen zu gewährleisten.

Ebenso bringt es Vorteile mit sich, wenn die erste Steuereinheit und/oder die zweite Steuereinheit als Mikrocontroller, insbesondere als programmierbarer Mikrocontroller, ausgebildet ist. Mikrocontroller bieten eine kompakte und energieeffiziente Lösung für die Steuerungsaufgaben des Akkumulators. Sie vereinen beispielsweise Recheneinheit, Speicher und verschiedene Peripherieschnittstellen in einem Bauteil, was den Platzbedarf und die Komplexität der Schaltung reduziert. Die zuvor und im Folgenden beschriebenen Komponenten der ersten und/oder zweiten Steuereinheit können als integrierte Bauteile in einem Mikrocontroller vorgesehen sein. Falls die erste Steuereinheit einen ersten Steuerkern und einen zweiten Steuerkern aufweist, umfasst jeder Steuerkern beispielsweise eine eigene Recheneinheit.

Vorteilhaft ist es zudem, wenn der Akkumulator zumindest eine Akkudatenschnittstelle, insbesondere eine oder mehrere Akkudatenschnittstellen zum insbesondere bidirektionalen Datenaustausch umfasst. Diese Schnittstelle ermöglicht beispielsweise eine direkte und standardisierte Kommunikation zwischen dem Akkumulator und externen Geräten. Die Akkudatenschnittstelle kann vorzugsweise als physische Verbindung, etwa in Form eines USB-Anschlusses oder einer proprietären Steckverbindung, ausgeführt sein. Sie kann ebenfalls in die Energieschnittstelle integriert sein. Eventuell können Daten über dieselben Kontakte übertragen werden, über die eine Energieversorgung von Endgeräten stattfindet.

Ergänzend oder alternativ kann die Akkudatenschnittstelle auch als drahtlose Schnittstelle ausgebildet sein. Die drahtlose Datenschnittstelle kann beispielsweise als Nahfunk- und/oder Fernfunkschnittstelle ausgebildet sein. Die drahtlose Datenschnittstelle kann hierbei beispielsweise die Fernfunktechnologien Sigfox, LoRaWAN, 5G, LTE, Satellitenkommunikation, LTE-M, DASH7, WiFi, HAPS-Mobilfunkstandard, NB-IoT und/oder WiMAX unterstützen. Denkbar ist die Nutzung aller gängigen Mobilfunkstandards, insbesondere 5G, 4G, 3G, 2G, LTE-CAT M. Auch denkbar ist die Nutzung eines eigens entwickelten proprietären Mobilfunkprotokolls. Zusätzlich oder alternativ kann die drahtlose Datenschnittstelle die Nahfunktechnologien Bluetooth, Wi-Fi, Zigbee, NFC, Z-Wave, Infrarot, Thread, Ultra-Wideband, Bluetooth Low Energy, ANT+, Wi-Fi Direct und/oder RFID unterstützen. In Verbindung mit der IoT-Funktionalität kann die Akkudatenschnittstelle beispielsweise dazu dienen, den Akkumulator in größere Energiemanagementsysteme einzubinden. Hierdurch kann beispielsweise eine effiziente Lastverteilung in Systemen mit mehreren Akkumulatoren erreicht werden. Die Akkudatenschnittstelle kann zudem für Firmware-Updates oder die Konfiguration benutzerdefinierter Funktionen genutzt werden, ohne den Akkumulator öffnen oder aus dem Gerät entfernen zu müssen. Die Akkudatenschnittstelle kann hierbei beispielsweise mit einer Cloud kommunizieren, wobei die Kommunikation insbesondere bidirektional stattfindet. Die Akkudatenschnittstelle kann hierbei sowohl Daten von der Cloud empfangen als auch Daten an die Cloud senden. Über die Akkudatenschnittstelle können beispielsweise detaillierte Informationen über den Ladezustand, die Temperatur oder die Lebensdauer des Akkumulators in Echtzeit übertragen werden. Dies kann insbesondere für Diagnosezwecke oder zur Optimierung der Akkumulatornutzung verwendet werden. Der Akkumulator kann beispielsweise eine Außenschnittstelle für eine ansteckbare Außenantenne zur Verbesserung der Signalübertragung aufweisen.

Vorteile bringt es zudem mit sich, wenn die Akkudatenschnittstelle ausschließlich mit der zweiten Steuereinheit oder dem zweiten Steuerkern verbunden ist. Diese Konfiguration unterstützt die funktionale Trennung zwischen den kritischen Sicherheitsfunktionen und den erweiterten Kommunikationsfähigkeiten des Akkumulators. Durch die exklusive Anbindung an die zweite Steuereinheit oder den zweiten Steuerkern wird verhindert, dass über die Akkudatenschnittstelle ein direkter Zugriff auf sicherheitsrelevante Funktionen der ersten Steuereinheit oder des ersten Steuerkerns erfolgen kann. Die zweite Steuereinheit oder der zweite Steuerkern kann als Vermittler fungieren und nur ausgewählte, unkritische Daten über die Akkudatenschnittstelle nach außen weitergeben, bzw. unkritische Steuerbefehle an die erste Steuereinheit oder den ersten Steuerkern weitergeben.

Diese Architektur ermöglicht es zudem, Updates oder Konfigurationsänderungen über die Akkudatenschnittstelle durchzuführen, ohne das Risiko einzugehen, dass dabei versehentlich sicherheitskritische Funktionen beeinträchtigt werden. Die Akkudatenschnittstelle kann außerdem insbesondere auch zur Implementierung benutzerdefinierter Funktionen genutzt werden, die ausschließlich im Verantwortungsbereich der zweiten Steuereinheit oder des zweiten Steuerkerns liegen.

Auch ist es von Vorteil, wenn eine Datenverbindung zwischen der zweiten Steuereinheit und der ersten Steuereinheit oder dem zweiten Steuerkern und dem ersten Steuerkern Leserechte, insbesondere aber keine Schreibrechte umfasst. Beispielsweise kann die zweite Steuereinheit oder kann der zweite Steuerkern Leserechte, aber insbesondere keine Schreibrechte für die erste Steuereinheit oder den ersten Steuerkern besitzen. Diese Konfiguration ermöglicht es der zweiten Steuereinheit oder dem zweiten Steuerkern, relevante Informationen von der ersten Steuereinheit oder dem ersten Steuerkern abzurufen, ohne dabei die Möglichkeit zu haben, kritische Funktionen oder Parameter zu verändern. Die zweite Steuereinheit oder der zweite Steuerkern kann beispielsweise Daten über den Ladezustand, die Temperatur oder andere Betriebsparameter auslesen und diese für IoT-Anwendungen oder Benutzerinformationen nutzen. Durch ein Beschränken der Schreibrechte wird verhindert, dass potenzielle Sicherheitsrisiken oder Fehlfunktionen in der zweiten Steuereinheit oder dem zweiten Steuerkern die grundlegenden Sicherheits- und Betriebsfunktionen des Akkumulators beeinträchtigen können. Beispielsweise können die Schreibrechte bei Programmfunktionalitäten grundsätzlich ausgeschlossen sein. Es ist denkbar, dass auf Parameterebene, insbesondere innerhalb eines Wertebereichs, eingeschränkte Schreibrechte zugelassen sein können. So kann insbesondere eine Abschalttemperatur des Akkumulators aus Sicherheitsgründen vom Benutzer zwar nicht erhöht, aber reduziert werden. Diese Ausführung des Akkumulators kann insbesondere durch Hardware-Implementierungen, wie unidirektionale Datenleitungen oder Sicherheitsschaltkreise, realisiert werden. Alternativ können auch Software-basierte Zugriffskontrollen eingesetzt werden.

Ebenso ist es vorteilhaft, wenn die erste Steuereinheit einen Datenspeicher aufweist, wobei der Datenspeicher einen geschützten Bereich umfasst, der insbesondere ausschließlich dem ersten Steuerkern zugeordnet ist. Dies ermöglicht eine sichere Speicherung kritischer Daten und Betriebsparameter des Akkumulators. Der geschützte Bereich kann beispielsweise Kalibrierungsdaten, Sicherheitsgrenzwerte oder Authentifizierungsschlüssel enthalten, die für den zuverlässigen und sicheren Betrieb des Akkumulators essenziell sind. Durch die exklusive Zuordnung zum ersten Steuerkern wird verhindert, dass diese sensiblen Informationen von anderen Systemkomponenten manipuliert oder eventuell ausgelesen werden können. Der geschützte Bereich des Datenspeichers kann vorzugsweise als separater physischer Speicherbereich realisiert sein, der durch Hardware-Mechanismen abgesichert ist. Alternativ können auch Software-basierte Verschlüsselungs- und Zugriffsschutzmechanismen implementiert werden.

In diesem Zusammenhang ist es vorteilhaft, wenn der Datenspeicher einen ungeschützten Bereich aufweist, der insbesondere ausschließlich dem zweiten Steuerkern zugeordnet ist. Hierdurch werden eine flexible Nutzung und Verwaltung von Daten, die für erweiterte Funktionen und Benutzerinteraktionen relevant sind, ermöglicht. Der ungeschützte Bereich kann beispielsweise benutzerdefinierte Programme, benutzerdefinierte Einstellungen, Nutzungsstatistiken, Konfigurationseinstellungen für IoT-Funktionen oder temporäre Daten für Berechnungen, Analysen und für die Ausführung von Programmen speichern. Durch die Zuordnung zum zweiten Steuerkern wird eine klare Trennung zwischen sicherheitskritischen und benutzerorientierten Daten erreicht. Der ungeschützte Bereich kann vorzugsweise so ausgelegt sein, dass er über die IoT-Schnittstelle, die Programmierschnittstelle und/oder die Akkudatenschnittstelle zugänglich ist. Auch können Drittanbieter-Anwendungen beispielsweise auf den ungeschützten Bereich zugreifen, ohne sensible Informationen zu kompromittieren.

Ebenso ist es vorteilhaft, wenn die erste Steuereinheit oder der erste Steuerkern einen Festwertspeicher (ROM) umfasst. Der Festwertspeicher ermöglicht eine unveränderliche Speicherung kritischer Daten und Programmcode, die für den grundlegenden Betrieb und die Sicherheit des Akkumulators essenziell sind. Hierdurch wird gewährleistet, dass zentrale Funktionen und Sicherheitsparameter nicht versehentlich oder durch böswillige Eingriffe verändert werden können. Im Festwertspeicher können beispielsweise Grenzwerte für Betriebsparameter, Firmware-Basiskomponenten, Bootloader, kryptographische Schlüssel und/oder Sicherheitsalgorithmen hinterlegt sein. Der Festwertspeicher kann vorzugsweise als Mask-ROM ausgeführt sein, bei dem die Daten bereits während der Herstellung fest einprogrammiert werden. Alternativ können auch "One-Time Programmable" (OTP) Speicher verwendet werden, die eine einmalige Programmierung nach der Produktion erlauben.

Vorteilhaft ist es, wenn die zweite Steuereinheit oder der zweite Steuerkern einen Direktzugriffsspeicher (RAM) umfasst. Der Direktzugriffsspeicher ermöglicht eine schnelle und flexible Verarbeitung von Daten, die für die erweiterten Funktionen des Akkumulators benötigt werden. Der Direktzugriffsspeicher kann beispielsweise für die Ausführung von benutzerdefinierten Programmen und Funktionen und/oder die Zwischenspeicherung von Daten für IoT-Anwendungen verwendet werden. Durch die Zuordnung des RAM zur zweiten Steuereinheit oder zum zweiten Steuerkern wird eine klare Trennung zwischen dem flüchtigen Arbeitsspeicher für erweiterte Funktionen und dem persistenten Speicher für kritische Systemfunktionen erreicht. Der Direktzugriffsspeicher kann vorzugsweise als dynamischer RAM (DRAM) oder als statischer RAM (SRAM) ausgeführt sein.

Der erfindungsgemäße Akkumulator eignet sich für den Betrieb einer Vielzahl von Endgeräten aus verschiedenen Anwendungsbereichen. Im Bereich der Elektrowerkzeuge kann er beispielsweise Akkubohrschrauber, Akku-Winkelschleifer, verschiedene Akku-Sägen wie Kreissägen, Stichsägen und Säbelsägen, sowie Akku-Schlagbohrmaschinen und Akku-Hämmer mit Energie versorgen. Auch Gartengeräte wie Akku-Rasenmäher, Akku-Heckenscheren, Akku-Kettensägen, Akku-Laubbläser, Akku-Pumpen und Akku-Trimmer können von diesem Akkumulator profitieren. Im Bereich der Reinigungsgeräte kann er Anwendung in Akkustaubsaugern, Akku-Hochdruckreinigern und Akku-Kehrmaschinen finden. Mobilgeräte wie Laptops, Tablets und Smartphones können ebenfalls mit diesem Akkumulator betrieben werden oder der Akkumulator kann als Powerbank für diese Geräte dienen. Im Bereich der elektrischen Fortbewegungsmittel eignet er sich für E-Bikes, E-Scooter, Elektroroller und elektrische Skateboards. Haushaltsgeräte wie Staubsaugerroboter, tragbare Kühlboxen und akkubetriebene Ventilatoren können ebenso von diesem Akkumulator profitieren. Für Outdoor- und Freizeitaktivitäten kann er beispielsweise Campinglampen und elektrische Kühlboxen mit Energie versorgen. Auch kann der Akkumulator beispielsweise für Überwachungskameras, tragbare Alarmsysteme und Notbeleuchtungssysteme verwendet werden.

Außerdem ist es vorteilhaft, wenn der Akkumulator als Arbeitsgeräteakkumulator, Gartengeräteakkumulator und/oder als Werkzeuggeräteakkumulator ausgebildet ist. Arbeitsgeräte, Gartengeräte und Werkzeuggeräte können gleichermaßen von der Sicherheitsarchitektur des Akkumulators profitieren.

Als Arbeitsgeräteakkumulator kann der Akkumulator beispielsweise in tragbaren Messgeräten, Beleuchtungseinrichtungen und/oder Baustellenradios eingesetzt werden. In dieser Funktion ist er darauf ausgelegt, zuverlässig und ausdauernd Energie für intensive Arbeitseinsätze bereitzustellen.

In der Ausführung als Gartengeräteakkumulator eignet sich der Akkumulator beispielsweise für den Betrieb von Geräten wie Akku-Rasenmähern, Akku-Heckenscheren, Akku-Kettensägen und/oder Akku-Laubbläsern. Hierbei ist der Akkumulator so konzipiert, dass er den spezifischen Belastungen und Umwelteinflüssen im Außenbereich standhält.

Als Werkzeuggeräteakkumulator findet der Akkumulator insbesondere Anwendung in Elektrowerkzeugen wie Akkubohrschraubern, Akku-Winkelschleifern, verschiedenen Akku-Sägen und/oder Akku-Schlagbohrmaschinen. In dieser Ausführung ist der Akkumulator darauf ausgelegt, kurzzeitige hohe Leistungsabgaben zu ermöglichen und gleichzeitig robust genug zu sein, um den rauen Bedingungen auf Baustellen oder in Werkstätten zu widerstehen.

Der Akkumulator ist insbesondere als IoT-Arbeitsgeräteakkumulator, IoT-Gartengeräteakkumulator und/oder als IoT-Werkzeuggeräteakkumulator ausgebildet.

Vorteilhaft ist es, wenn der Akkumulator als mobiler Akkumulator ausgebildet ist, wobei der Akkumulator insbesondere lösbar an einer Endgeräteschnittstelle befestigbar ist. Diese Mobilität ermöglicht es, den Akkumulator in verschiedenen Endgeräten zu verwenden und bei Bedarf auszutauschen oder separat aufzuladen.

Der Akkumulator weist hierzu insbesondere eine Befestigungsvorrichtung auf, die beispielsweise mechanische Verbindungselemente zur physischen Befestigung des Akkumulators an der Endgeräteschnittstelle umfasst. Die Befestigungsvorrichtung kann beispielsweise einen Schnappmechanismus, eine Schiebeverriegelung und/oder ein Bajonett-System umfassen.

Das erfindungsgemäße Verfahren eignet sich zum Betreiben eines Akkumulators, wobei der Akkumulator insbesondere gemäß der vorangegangenen Beschreibung ausgebildet ist. Dabei können die beschriebenen Merkmale einzeln oder in beliebiger Kombination verwirklicht sein. Für das Verfahren wird vorgeschlagen, dass Grundfunktionen des Akkumulators von einer ersten Steuereinheit oder einem ersten Steuerkern der ersten Steuereinheit und erweiterte Funktionen des Akkumulators von einer zweiten Steuereinheit oder einem zweiten Steuerkern der ersten Steuereinheit gesteuert werden. Wie zuvor beschrieben, ermöglicht die Aufteilung in Grundfunktionen und erweiterte Funktionen eine effiziente und sichere Betriebsweise des Akkumulators.

Besonders vorteilhaft für das Verfahren ist es, wenn die Grundfunktionen die Betriebssicherheit des Akkumulators betreffen, und die erweiterten Funktionen benutzerdefinierte und/oder gerätespezifische Funktionen umfassen. Die Grundfunktionen, die von der ersten Steuereinheit oder dem ersten Steuerkern gesteuert werden, können insbesondere kritische Sicherheitsaspekte betreffen. Dies umfasst beispielsweise den Schutz vor Überladung, Tiefentladung, Kurzschlüssen oder thermischen Überlastungen. Insbesondere umfassen die Grundfunktionen das Batteriemanagement.

Die erweiterten Funktionen, gesteuert von der zweiten Steuereinheit oder dem zweiten Steuerkern, eröffnen Raum für benutzerdefinierte Anpassungen. Diese können insbesondere Programmierbarkeit, IoT-Fähigkeiten, Benutzerschnittstellen und zusätzliche Analysefunktionen umfassen. Die klare Trennung verhindert, dass benutzerdefinierte Funktionen die grundlegende Betriebssicherheit beeinträchtigen können. Gleichzeitig ermöglicht sie eine flexible Anpassung des Akkumulators an spezifische Anwendungsszenarien oder Benutzerpräferenzen, ohne dass dafür Eingriffe in die sicherheitskritischen Bereiche erforderlich sind.

Gerätespezifischen Funktionen können beispielsweise alternative Betriebsmodi, das Verfahren von Stellmotoren und/oder das Festlegen von abstrakten Betriebsparametern, die von einer Endgerätesteuereinheit insbesondere in grundlegende Betriebsparameter übersetzt werden müssen, umfassen. Steuerungsbefehle für spezifische Funktionen gehen insbesondere über eine reine Energieversorgung des Endgeräts durch den Akkumulator hinaus und erfordern beispielsweise eine Übertragung komplexer Daten zwischen dem Akkumulator und dem Endgerät. Auch ist es äußert vorteilhaft, wenn bei einem Konflikt Steuerungsbefehle der ersten Steuereinheit vorrangig gegenüber Steuerungsbefehlen der zweiten Steuereinheit oder Steuerungsbefehle des ersten Steuerkerns vorrangig gegenüber Steuerungsbefehlen des zweiten Steuerkerns ausgeführt werden. Diese Hierarchie stellt sicher, dass die grundlegenden Sicherheits- und Betriebsfunktionen stets Vorrang haben. Im Falle widersprüchlicher Anweisungen wird dadurch gewährleistet, dass die kritischen Funktionen zur Erhaltung der Betriebssicherheit nicht durch erweiterte oder benutzerdefinierte Funktionen überschrieben werden können. Dies kann beispielsweise relevant sein, wenn ein vom Benutzer definiertes Ladeprofil mit Sicherheitsgrenzwerten in Konflikt gerät. In solchen Situationen würden die von der ersten Steuereinheit oder dem ersten Steuerkern festgelegten Sicherheitsparameter automatisch Vorrang erhalten. Dieser Vorrang kann beispielsweise durch hardwarebasierte Mechanismen, wie priorisierte Interrupt-Strukturen, oder durch softwarebasierte Entscheidungsalgorithmen implementiert werden.

Weitere Vorteile der Erfindung sind in den nachfolgenden Ausführungsbeispielen beschrieben. Es zeigen, jeweils schematisch:
- **Figur 1**: eine isometrische Ansicht eines ersten Ausführungsbeispiels eines erfindungsgemäßen Akkumulators,
- **Figur 2**: eine geschnittene Seitenansicht des ersten Ausführungsbeispiels des erfindungsgemäßen Akkumulators,
- **Figur 3**: eine geschnittene Seitenansicht eines zweiten Ausführungsbeispiels des erfindungsgemäßen Akkumulators, und
- **Figur 4**: eine geschnittene Seitenansicht eines dritten Ausführungsbeispiels des erfindungsgemäßen Akkumulators.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

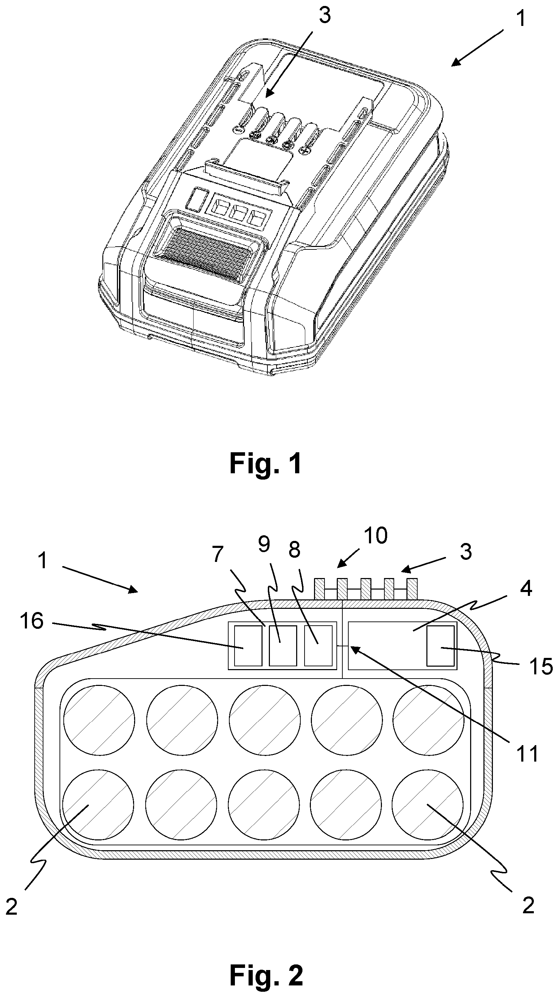

Figur 1 und Figur 2 zeigen ein erstes Ausführungsbeispiel eines erfindungsgemäßen Akkumulators 1 in unterschiedlichen Ansichten.

Figur 1 stellt eine isometrische Ansicht des Akkumulators 1 dar. Der Akkumulator 1 weist eine kompakte, rechteckige Gehäuseform auf, wie sie typischerweise bei Elektrowerkzeugen Verwendung findet. An der Oberseite des Ackumulators 1 ist eine Energieschnittstelle 3 vorgesehen, die zur Verbindung mit einem Endgerät oder einer externen Energiequelle dient. Die Energieschnittstelle 3 umfasst beispielsweise mehrere elektrische Kontakte, über die elektrische Energie in Form einer Spannung und einer Stromstärke übertragen werden kann.

Figur 2 zeigt eine geschnittene Seitenansicht des Akkumulators 1, die den inneren Aufbau verdeutlicht. Im Inneren des Gehäuses sind mehrere Akkumulatorzellen 2 angeordnet, die beispielsweise in zwei Reihen zu je fünf Zellen angeordnet sind. Diese Akkumulatorzellen 2 dienen der Aufnahme, Speicherung und Abgabe von Energie und stellen damit die Grundfunktion des Akkumulators 1, nämlich die Versorgung von Endgeräten mit Energie, bereit.

Der Akkumulator 1 umfasst eine erste Steuereinheit 4. Die erste Steuereinheit 4 kann beispielsweise für die Steuerung von Grundfunktionen des Akkumulators 1 vorgesehen sein. Insbesondere kann die erste Steuereinheit 4 als Batteriemanagementsystem ausgebildet sein. Neben der ersten Steuereinheit 4 umfasst der Akkumulator 1 in diesem Ausführungsbeispiel eine zweite Steuereinheit 7. Die zweite Steuereinheit 7 ist beispielsweise für die Steuerung von erweiterten Funktionen, die insbesondere über grundlegende Betriebs- und Sicherheitsfunktionen hinausgehen, ausgebildet.

In diesem Ausführungsbeispiel umfasst der Akkumulator 1 eine als physische Verbindung ausgeführte Akkudatenschnittstelle 10, die insbesondere direkt und ausschließlich mit der zweiten Steuereinheit 7 verbunden ist und dem Datenaustausch mit externen Geräten dient. Beispielsweise über die Akkudatenschnittstelle 10 kann eine IoT-Schnittstelle 8 der zweiten Steuereinheit 7 mit anderen loT-fähigen Geräten kommunizieren.

Zusätzlich verfügt die zweite Steuereinheit 7 über eine Programmierschnittstelle 9, die insbesondere die Implementierung benutzerdefinierter Funktionen erlaubt. Auf diese Weise können die Funktionen des Akkumulators 1 insbesondere im Rahmen der von der ersten Steuereinheit 4 vorgegebenen Sicherheitsparameter von einem Benutzer frei programmiert werden.

Zwischen der ersten Steuereinheit 4 und der zweiten Steuereinheit 7 besteht eine Datenverbindung 11. Diese ermöglicht einen kontrollierten Informationsaustausch zwischen den Steuereinheiten 4, 7, wobei die zweite Steuereinheit 7 beispielsweise nur Leserechte, aber keine Schreibrechte für die Daten der ersten Steuereinheit 4 hat.

Die erste Steuereinheit 4 umfasst insbesondere für die Speicherung von sicherheitsrelevanten Betriebsparametern für den Akkumulator 1 einen Festwertspeicher 15. Der Inhalt des Festwertspeichers 15 kann nicht verändert werden, so dass dieser nicht versehentlich oder vorsätzlich manipuliert werden kann. Die zweite Steuereinheit 7 ist im Gegenzug beispielsweise mit einem Direktzugriffsspeicher 16 ausgestattet, der eine schnelle und flexible Verarbeitung von Daten für die erweiterten Funktionen des Akkumulators 1 ermöglicht. Insbesondere kann der Direktzugriffsspeicher 16 für die Ausführung von benutzerdefinierten Programmen verwendet werden.

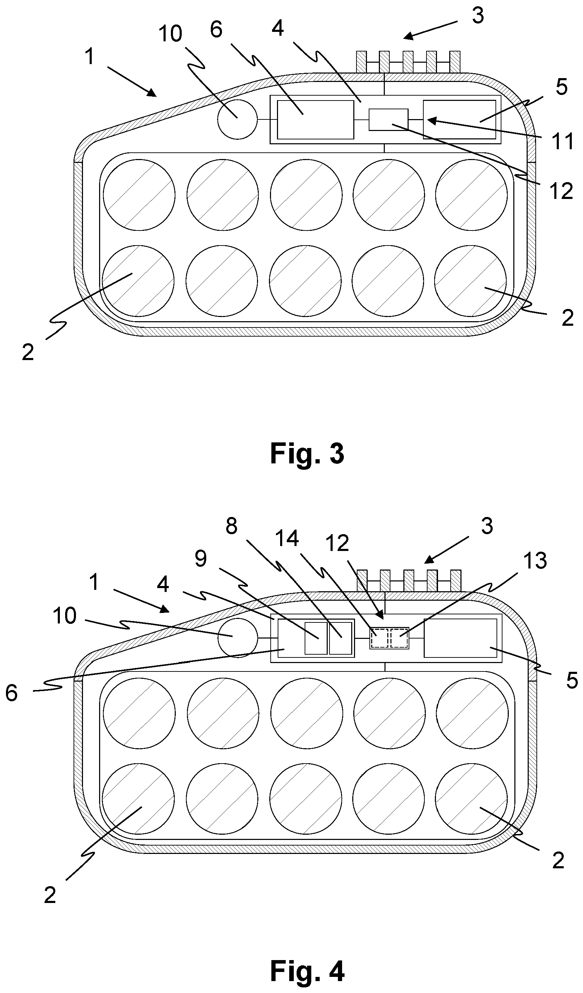

Figur 3 zeigt ein zweites Ausführungsbeispiel des erfindungsgemäßen Akkumulators 1. Im Gegensatz zum vorherigen Ausführungsbeispiel umfasst der Akkumulator 1 hier nur die erste Steuereinheit 4. Die erste Steuereinheit 4 umfasst aber einen ersten Steuerkern 5 und einen zweiten Steuerkern 6. Der erste Steuerkern 5 kann hierbei für die Steuerung der Grundfunktionen des Akkumulators 1 ausgebildet sein. Hierzu ist der erste Steuerkern 5 beispielsweise als Batteriemanagementsystem ausgebildet. Der zweite Steuerkern 6 ist beispielsweise für erweiterte Funktionen, insbesondere loT-bezogene und benutzerdefinierte Funktionen, zuständig.

Im Gegensatz zum Ausführungsbeispiel der Figuren 1 und 2 ist die Akkudatenschnittstelle 10 hier als kabellose Schnittstelle ausgebildet. Hierdurch kann der Akkumulator 1 mit Geräten in der Umgebung kommunizieren, die ebenfalls über entsprechende Schnittstellen verfügen. Insbesondere kommt eine Kommunikation mit einem Unterhaltungselektronikgerät eines Benutzers, anderen Akkumulatoren 1 und/oder Endgeräten in der Umgebung infrage. Wie bereits beschrieben kann die Akkudatenschnittstelle 10 insbesondere als Mobilfunk-, WLAN-, Bluetooth-, Zigbee- und/oder LoRaWAN-Schnittstelle ausgebildet sein. Die Akkudatenschnittstelle 10 ist insbesondere direkt und ausschließlich mit dem zweiten Steuerkern 6 verbunden.

In diesem Ausführungsbeispiel umfasst die erste Steuereinheit 4 zudem einen Datenspeicher 12, der beispielsweise zur Speicherung von Daten und/oder zur Ausführung von Programmen verwendet werden kann. Zwischen dem ersten Steuerkern 5 und dem zweiten Steuerkern 6 besteht eine Datenverbindung 11. Analog zum vorherigen Ausführungsbeispiel, hat der zweite Steuerkern 6 beispielsweise nur Leserechte, aber keine Schreibrechte für die Daten des ersten Steuerkerns 5.

Figur 4 zeigt ein drittes Ausführungsbeispiel des erfindungsgemäßen Akkumulators 1. In diesem Beispiel sind mögliche Ausführungen des zweiten Steuerkerns 6 und des Datenspeichers 12 näher dargestellt. Der zweite Steuerkern 6 umfasst beispielsweise eine IoT-Schnittstelle 8. Wie bereits beschrieben ermöglicht die IoT-Schnittstelle 8 eine direkte Anbindung des Ackumulators 1 an IoT-Netzwerke und -Dienste. Die IoT-Schnittstelle 8 kann insbesondere über die Akkudatenschnittstelle 10 verschiedene Wireless-Technologien wie Mobilfunk, WLAN, Bluetooth, Zigbee und/oder LoRaWAN unterstützen.

Der zweite Steuerkern 6 umfasst außerdem beispielsweise eine Programmierschnittstelle 9. Durch die Programmierschnittstelle 9 können wie bereits beschrieben die Funktionen des Akkumulators 1 im Rahmen der vom ersten Steuerkern 5 vorgegebenen Sicherheitsparameter frei, insbesondere von einem Benutzer des Akkumulators 1, programmiert werden.

Der Datenspeicher 12 ist in diesem Ausführungsbeispiel in zwei distinkte Bereiche unterteilt. Ein geschützter Bereich 13 des Datenspeichers 12 ist beispielsweise exklusiv dem ersten Steuerkern 5 zugeordnet. Dieser Bereich dient beispielsweise der sicheren Speicherung kritischer Daten und Betriebsparameter des Akkumulators 1. Durch die exklusive Zuordnung zum ersten Steuerkern 5 wird verhindert, dass diese sensiblen Informationen von anderen Systemkomponenten manipuliert und/oder ausgelesen werden können.

Ein ungeschützter Bereich 14 des Datenspeichers 12 ist beispielsweise für die Speicherung von Daten vorgesehen, die für die erweiterten Funktionen und Benutzerinteraktionen relevant sind. Dieser Bereich kann insbesondere von der IoT-Schnittstelle 8 und/oder der Programmierschnittstelle 9 des zweiten Steuerkerns 6 genutzt werden. Hier können beispielsweise Nutzungsstatistiken, Konfigurationseinstellungen für IoT-Funktionen oder temporäre Daten für Berechnungen und Programmabläufe gespeichert werden.

### Bezugszeichenliste

- 1: Akkumulator
- 2: Akkumulatorzelle
- 3: Energieschnittstelle
- 4: erste Steuereinheit
- 5: erster Steuerkern
- 6: zweiter Steuerkern
- 7: zweite Steuereinheit
- 8: IoT-Schnittstelle
- 9: Programmierschnittstelle
- 10: Akkudatenschnittstelle
- 11: Datenverbindung
- 12: Datenspeicher
- 13: geschützter Bereich
- 14: ungeschützter Bereich
- 15: Festwertspeicher
- 16: Direktzugriffsspeicher

## Patentansprüche

1. Akkumulator (1), insbesondere IoT-Akkumulator, mit wenigstens einer Akkumulatorzelle (2) zur Aufnahme, Speicherung und Abgabe von Energie,
einer Energieschnittstelle (3) zur Verbindung des Akkumulators (1) mit einem Endgerät und/oder einer externen Energiequelle, und
einer ersten Steuereinheit (4) zum Steuern der wenigstens einen Ackumulatorzelle (2) und/oder der Energieschnittstelle (3),
**dadurch gekennzeichnet,**
**dass** die erste Steuereinheit (4) einen ersten Steuerkern (5) und einen zweiten Steuerkern (6) umfasst oder dass der Akkumulator (1) zusätzlich zur ersten Steuereinheit (4) eine zweite Steuereinheit (7) umfasst.

2. Akkumulator (1) nach dem vorherigen Anspruch, **dadurch gekennzeichnet, dass** die erste Steuereinheit (4) oder der erste Steuerkern (5) der ersten Steuereinheit (4) als Batteriemanagementsystem ausgebildet ist.

3. Akkumulator (1) nach einem der vorherigen Ansprüche, **dadurch gekennzeichnet, dass** die zweite Steuereinheit (7) oder der zweite Steuerkern (6) als IoT-Schnittstelle (8) ausgebildet ist oder eine IoT-Schnittstelle (8) umfasst.

4. Akkumulator (1) nach dem vorherigen Anspruch, **dadurch gekennzeichnet, dass** die zweite Steuereinheit (7) oder der zweite Steuerkern (6) eine Programmierschnittstelle (9) umfasst.

5. Akkumulator (1) nach einem der vorherigen Ansprüche, **dadurch gekennzeichnet, dass** die erste Steuereinheit (4) und/oder die zweite Steuereinheit (7) als Mikrocontroller, insbesondere als programmierbarer Mikrocontroller, ausgebildet ist.

6. Akkumulator (1) nach einem der vorherigen Ansprüche, **dadurch gekennzeichnet, dass** der Akkumulator (1) zumindest eine Akkudatenschnittstelle (10) zum insbesondere bidirektionalen Datenaustausch umfasst.

7. Akkumulator (1) nach dem vorherigen Anspruch, **dadurch gekennzeichnet, dass** die Akkudatenschnittstelle (10) ausschließlich mit der zweiten Steuereinheit (7) oder dem zweiten Steuerkern (6) verbunden ist.

8. Akkumulator (1) nach einem der vorherigen Ansprüche, **dadurch gekennzeichnet, dass** eine Datenverbindung (11) zwischen der zweiten Steuereinheit (7) und der ersten Steuereinheit (4) oder dem zweiten Steuerkern (6) und dem ersten Steuerkern (5) Leserechte insbesondere aber keine Schreibrechte umfasst.

9. Akkumulator (1) nach einem der vorherigen Ansprüche, **dadurch gekennzeichnet, dass** die erste Steuereinheit (4) einen Datenspeicher (12) aufweist, wobei der Datenspeicher (12) einen geschützten Bereich (13) umfasst, der insbesondere ausschließlich dem ersten Steuerkern (5) zugeordnet ist.

10. Akkumulator (1) nach dem vorherigen Anspruch, **dadurch gekennzeichnet, dass** der Datenspeicher (12) einen ungeschützten Bereich (14) aufweist, der insbesondere ausschließlich dem zweiten Steuerkern (6) zugeordnet ist.

11. Akkumulator (1) nach einem der vorherigen Ansprüche, **dadurch gekennzeichnet, dass** die erste Steuereinheit (4) oder der erste Steuerkern (5) einen Festwertspeicher (15) (ROM) umfasst.

12. Akkumulator (1) nach einem der vorherigen Ansprüche, **dadurch gekennzeichnet, dass** die zweite Steuereinheit (7) oder der zweite Steuerkern (6) einen Direktzugriffsspeicher (16) (RAM) umfasst.

13. Verfahren zum Betreiben eines Akkumulators (1), der insbesondere gemäß einem oder mehreren der vorherigen Ansprüche ausgebildet ist, **dadurch gekennzeichnet, dass** Grundfunktionen des Akkumulators (1) von einer ersten Steuereinheit (4) oder einem ersten Steuerkern (5) der ersten Steuereinheit (4) und erweiterte Funktionen des Akkumulators (1) von einer zweiten Steuereinheit (7) oder einem zweiten Steuerkern (6) der ersten Steuereinheit (4) gesteuert werden.

14. Verfahren nach dem vorangegangenen Anspruch, **dadurch gekennzeichnet, dass** die Grundfunktionen die Betriebssicherheit des Akkumulators (1) betreffen, und die erweiterten Funktionen benutzerdefinierte und/oder gerätespezifische Funktionen umfassen.

15. Verfahren nach einem der vorangegangenen Ansprüche, **dadurch gekennzeichnet, dass** bei einem Konflikt Steuerungsbefehle der ersten Steuereinheit (4) vorrangig gegenüber Steuerungsbefehlen der zweiten Steuereinheit (7) oder Steuerungsbefehle des ersten Steuerkerns (5) vorrangig gegenüber Steuerungsbefehlen des zweiten Steuerkerns (6) ausgeführt werden.
